# EUROPÄISCHE PATENTSCHRIFT

(11) **EP 1 084 882 B1**
(45) Veröffentlichungstag und Bekanntmachung des Hinweises auf die Patenterteilung: **11.07.2007**
(21) Anmeldenummer: 00119648.4
(22) Anmeldetag: 08.09.2000
(51) Int. Cl.: B60J 7/08, B60J 5/10

(54) **Personenkraftwagen mit einem variablen Dach-/Heckbereich**
Passenger motor vehicle equipped with a variable roof/tailgate area
Véhicule de passagers avec une aire de toit-/ hayon variable

(30) Priorität: 13.09.1999 DE 19943716
(43) Veröffentlichungstag der Anmeldung: 21.03.2001
(73) Patentinhaber: Webasto AG, 82131 Stockdorf (DE)
(72) Erfinder: de Gaillard, Francois, 95390 Mouilleron en pareds (FR)
(74) Vertreter: Wiese, Gerhard

(56) Entgegenhaltungen:
- FR-A- 2 748 241
- GB-A- 173 626
- US-A- 3 782 776
- US-A- 4 630 858
- US-A- 4 932 717
- US-A- 5 056 857
- US-A- 5 518 288

## Beschreibung

Die Erfindung betrifft einen Personenkraftwagen mit einem variablen Dach-/Heckbereich, insbesondere ein Kombi oder ein Geländewagen mit einem Heckladeraum, wobei ein Deckel eines hinteren Dachabschnitts und ein Heckteil zu öffnen sind.

Aus der DE 34 20 349 A1 ist ein Kombifahrzeug bekannt geworden, bei dem ein hinteres Dachteil zum Öffnen eines Dachausschnitts nach vorne verschiebbar oder gänzlich herausnehmbar ist. Eine Hecktüre ist über zwei als Rahmen für die verschiebbare Heckscheibe dienenden Arme am oberen, hinteren Endbereich des Fahrzeugaufbaus angelenkt. Bei abgesenkter Heckscheibe und nach vorne verschobenem Dachteil ist eine große Dach- und Hecköffnung zum Transport sperriger Güter gebildet.

In der EP 0 850 792 A1 ist ein Kraftfahrzeug offenbart, dessen Dachfläche zumindest zwei in Schließstellung flächig und parallel liegende und in eine Offenstellung überführbare Plattenteile aufweist. Die Plattenteile sind mittels einer Führungsmechanik aus der flächigen Parallellage in eine vollständig in den Karosserieraum eingefahrene Packlage überführbar, in der sie zum Dachbereich beabstandet und im wesentlichen vertikal und zueinander parallel angeordnet sind. Die Führungsmechanik zum Klappen und vertikalen Absenken der Plattenteile ist sehr aufwendig gestaltet. Außerdem werden die Plattenteil beim Öffnen zunächst oberhalb des Daches vertikal quer zur Fahrtrichtung aufgestellt, bevor sie vertikal abgesenkt werden.

Aus der US 5 518 288 A ist ein Laderaum eines Fahrzeugs bekannt, dessen Rückwand um eine am unteren Rand quer verlaufende Achse als Rampe nach außen geklappt werden kann. Zwei das Dach abdeckende Deckel sind an den Längskanten scharniert gelagert und können zur Freigabe einer Dachöffnung nach unten an die Seitenwände angeklappt werden.

Aus der US 4 932 717 A ist ein gattungsgemäßes Fahrzeug bekannt, dessen hinterer Laderaumdeckel mit einer Heckscheibe über ein Scharnier verbunden ist. Beide Teile können zur Freigabe einer hinteren und oberen Laderaumöffnung nach oben geschwenkt und im vorderen Dachbereich des Laderaums abgelegt werden.

Aufgabe der Erfindung ist es, einen eingangs genannten Personenkraftwagen anzugeben, bei dem der Deckel des hinteren Dachabschnitts mit unterschiedlichen Bewegungsmöglichkeiten aus der Schließposition öffenbar und auch während der Fahrt raumsparend ablegbar ist.

Diese Aufgabe wird bei dem eingangs genannten Personenkraftwagen erfindungsgemäß durch die Merkmale des Patentanspruchs 1 gelöst. Dabei ist der Deckel des hinteren Dachabschnitts um eine im Bereich seines Vorderrandes im Bereich des Daches verlaufende Querachse innerhalb der Fahrzeugkontur aus der Dachfläche herabschwenkbar. Für die Lagerung des Deckels ist somit eine einfach aufgebaute Schwenklagerung ausreichend. Komplizierte Bewegungsmechanismen sind nicht erforderlich. Die Schwenklagerung kann in Abhängigkeit von der jeweiligen Schwenkachse, die bezüglich des Fahrzeugs eine Querachse ist, an Bauteilen des Daches oder im Dachbereich angeordnet sein. Die Schwenkachse kann beim Verschwenken des Deckels von der Schwenklagerung in gewissem Maß versetzt werden, um durch einen angepaßten Bewegungsablauf einen dichten Eingriff eines Deckelrandes an ein angrenzendes Bauteil zu erzielen. Das Herabklappen des Deckels kann auch während der Fahrt vorgenommen werden, da es innerhalb der Fahrzeugkontur erfolgt und ohne deutliche Luftwiderstandserhöhung durchführbar ist. Somit wird beim Öffnen des Deckels und des Heckteils eine Ladefläche und ein Laderaum für sperrige Gegenstände geschaffen, wie dies von einem Pick-up-Fahrzeug bekannt ist.

Ausgestaltungen der Erfindung sind in den Unteransprüchen angegeben.

Gemäß einer bevorzugten Ausgestaltung kann der Deckel in seiner in etwa vertikal herabgeschwenkten Stellung eine rückseitige Abtrennung des vorderen Fahrgastraumes bilden.

Zum Versteifen der Karosserie oder zum Anbringen einer Lastenträgereinrichtung kann ein Dachquerholm am Hinterende des Daches lösbar angebracht sein, an dem der geschlossene Deckel dicht anliegt. Der Dachquerholm weist dann vorzugsweise die Dichtung auf, an der der Deckel anliegt. Um eine durchgehende Dachöffnung herzustellen, ist es zweckmäßig, wenn der Dachquerholm am Dach einerseits mit einer Gelenklagerung und andererseits mit einer lösbaren Befestigung angebracht ist, so daß er in eine in etwa vertikale Position herabklappbar ist. Jedoch kann alternativ dazu der Dachquerholm durch Lösen an seinen beiden Enden auch gänzlich vom Fahrzeug entfernt werden.

Das zu öffnende Heckteil ist gemäß der Erfindung ein Heckfenster, das in einer Hecktüre oder- klappe verschiebbar gelagert und in einen unteren Heckklappen- bzw. Türteil absenkbar ist, oder das zu öffnende Heckteil ist eine Heckscheibe, die am Heck verschiebbar gelagert und in eine untere Heckstruktur absenkbar ist.

Bei den Ausführungsbeispielen ist der Deckel zweckmäßigerweise aus transparentem Material und insbesondere aus Glas hergestellt. Bei einer großen Fläche des oberen Deckels ist auch eine Teilung in zwei oder mehrere Deckel möglich, die aneinander scharniert zunächst aneinander angeklappt werden und dann gemeinsam um eine am Rand der Dachöffnung angeordnete Schwenkachse nach innen in den freizugebenden Laderaum an eine vordere Wand geschwenkt werden.

Wenn die klappbaren und verschiebbaren Teile auch manuell bewegt werden können, so ist es doch bevorzugt, wenn ein oder mehrere vorzugsweise elektromechanischer Antriebe in einer gesteuerten Bewegungsabfolge den oder die Deckel und die Heckscheibe bzw. den oder die Deckel und den Dachquerholm und gegebenenfalls ein Heckfenster in einer Hecktüre bewegen.

Zusätzlich zu dem hinteren Deckel kann ein vorderer Schiebedachdeckel vorgesehen sein, der über den hinteren Deckel sowohl in dessen geschlossener wie auch geöffneter, herabgeschwenkter Stellung verschiebbar ist.

Nachfolgend werden Ausführungsbeispiele der Erfindung unter Bezugnahme auf Zeichnungen näher erläutert. Es zeigt:
- Fig. 1: in einer perspektivischen Draufsicht einen Geländewagen mit einer öffenbaren Dach-/Heckanordnung und einem geöffneten vorderen Schiebedachdeckel;
- Fig. 2: in einer perspektivischen Draufsicht den Geländewagen mit einem einwärts geklappten hinteren Deckel;
- Fig. 3: in einer perspektivischen Draufsicht den Geländewagen mit einem in der Art eines Pick-up-Fahrzeugs geöffneten Ladebereich;
- Fig. 4: in einer perspektivischen Seiten-/Hinteransicht den in den Fig. 1 bis 3 dargestellten Geländewagen;
- Fig. 5: in einer perspektivischen Seiten-/Hinteransicht ein weiteres Ausführungsbeispiel des Geländewagens,
- Fig. 6 bis 9: in einer perspektivischen Seiten-/Hinteransicht ein Kombifahrzeug mit verschiedenen Ausführungsbeispielen einer Dach/Heckanordnung, und
- Fig. 10: eine Variante einer Heckraumabdeckung mit mehreren Deckel-Teilen, wobei die Figuren 7 bis 10 nicht zur Erfindung gehören.

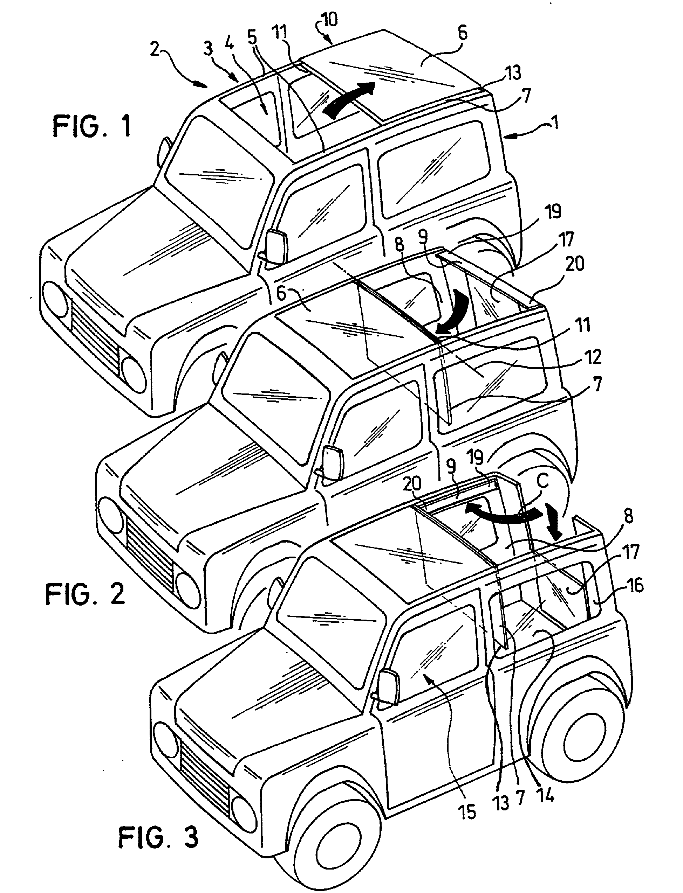

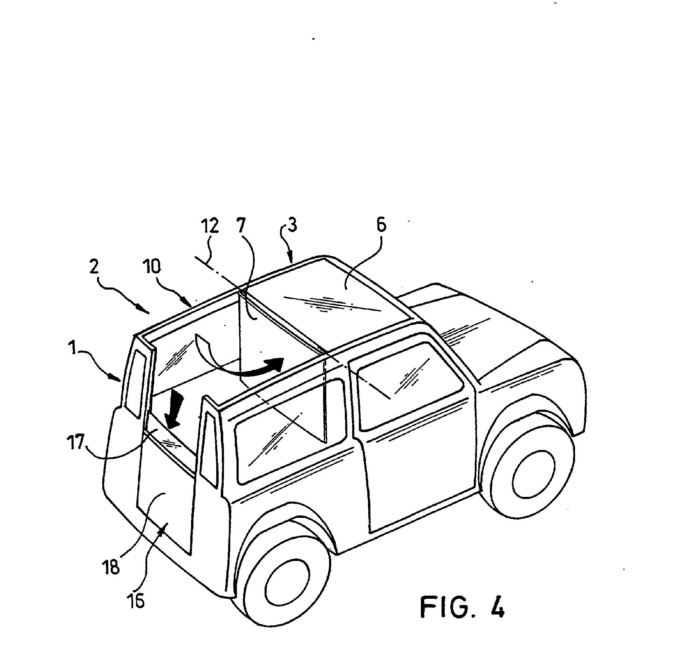

Ein Personenkraftwagen, z. B. in der Art eines geschlossenen Geländewagens (siehe Fig. 1 bis 3) mit einem hohen, kastenförmigen Heck 1 und einem im wesentlichen flachen Dach 2 weist in einem vorderen Dachabschnitt 3 eine vordere Dachöffnung 4 auf, die mit einem an seitlichen Dachholmen 5 verschiebbar gelagerten Schiebedachdeckel 6 bedeckt und aus einer Schließstellung (Fig. 2 und 3) in die dargestellte Offenstellung (Fig. 1) über einen hinteren Deckel 7 verschiebbar ist, der eine hintere Dachöffnung 8 in einem bis zu einem hinteren Dachquerholm 9 am Heck 1 reichenden hinteren Dachabschnitt 10 bedeckt.

Der hintere Deckel 7 ist mit einer Lagereinrichtung, die den Deckel 7 in Bereich seines Vorderrandes 11 beidseits an den seitlichen Dachholmen 5 lagert, um eine Fahrzeug-Querachse 12 schwenkbar gelagert, z. B. durch seitlich herausstehende Zapfen, die in Lager an den Dachholmen 5 eingreifen. In seiner Schließstellung ist der Deckel 7 an seinem Hinterrand 13 an dem hinteren Dachquerholm 9 oder beidseits an den Dachholmen 5 verriegelt. Zum Öffnen der hinteren Dachöffnung 8 wird die Verriegelung gelöst und der Deckel 7 wird um die Querachse 12 nach unten in eine in etwa vertikale Stellung geschwenkt (siehe Fig. 2).Der nach unten geschwenkte Deckel 7 wird dann entweder an einer Ladefläche 14 oder beidseits an der Karosserie verriegelt. Ein vorderer Fahrer- und Insassenbereich 15 ist durch den herabgeklappten Deckel 7 von der Ladefläche 14 abgetrennt. Eine Dichtung (nicht dargestellt) im Bereich der Querachse 12 dichtet den Vorderrand 11 des Deckels 7 gegen den Schiebedachdeckel 6 ab. An den beiden seitlichen Fahrzeuginnenseiten und an der Ladefläche 14 ist eine dichtende Anlage vorgesehen, an der der Deckel 7 dicht anliegt. Optional kann jedoch auch unabhängig vom herabgeschwenkten Deckel 7 eine separate Trennwand zwischen dem Fahrer- und Insassenbereich 15 und der Ladefläche 14 vorgesehen sein, die ihrerseits wiederum mit öffnungsfähigen Scheiben und/oder Türen versehen sein kann.

In einer Hecktüre 16 des Fahrzeugs, die zum Öffnen z. B. seitlich gelagert ist, ist ein Heckfenster 17 vertikal verschiebbar aufgenommen (siehe Fig. 3 und 4), das aus seiner oberen Schließstellung in eine untere, im geschlossenen Türteil 18 versenkte Stellung z. B. durch einen elektromechanischen Antrieb abgesenkt werden kann, so daß eine Ladefläche 14 mit einem im Dachbereich und im oberen Heckbereich geöffneten Laderaum in der Art eines Pickup-Fahrzeugs gebildet ist.

Der hintere Dachquerholm 9, der beispielsweise als Lastenträger dient und z. B. bei Geländefahrten zur Versteifung der Karosserie beitragen kann, ist an einem Ende 19, z. B. am rechten Ende gemäß den Fig. 1 bis 4, mit einem Schwenkgelenk am rechten Dachholm 5 angelenkt und an seinem anderen, linken Ende 20 am linken Dachholm 5 lösbar festgelegt. Nach dem Lösen dieser Festlegung ist der Dachquerholm 9 nach vorne an den rechten Dachholm 5 in eine Ablagestellung schwenkbar (siehe Pfeil C in Fig. 3), so daß der hintere Laderaum nach Absenken des Heckfensters 17 und Herunterschwenken des Deckels 7 nach oben und nach hinten vollständig freigelegt ist. Diese geöffnete Stellung des Fahrzeugdaches und des oberen Heckbereichs zeigt auch Fig.4.

Der Schiebedachdeckel 6 und der hintere Deckel 7 sind bevorzugt aus transparentem Material und insbesondere aus Glas hergestellt. Der Schiebedachdeckel 6 kann unabhängig von der Stellung des hinteren Deckels 7 z. B. durch elektrische Betätigung verschoben werden, um den Bereich der vorderen Dachöffnung 4 abzudecken oder wahlweise zumindest teilweise freizulegen.

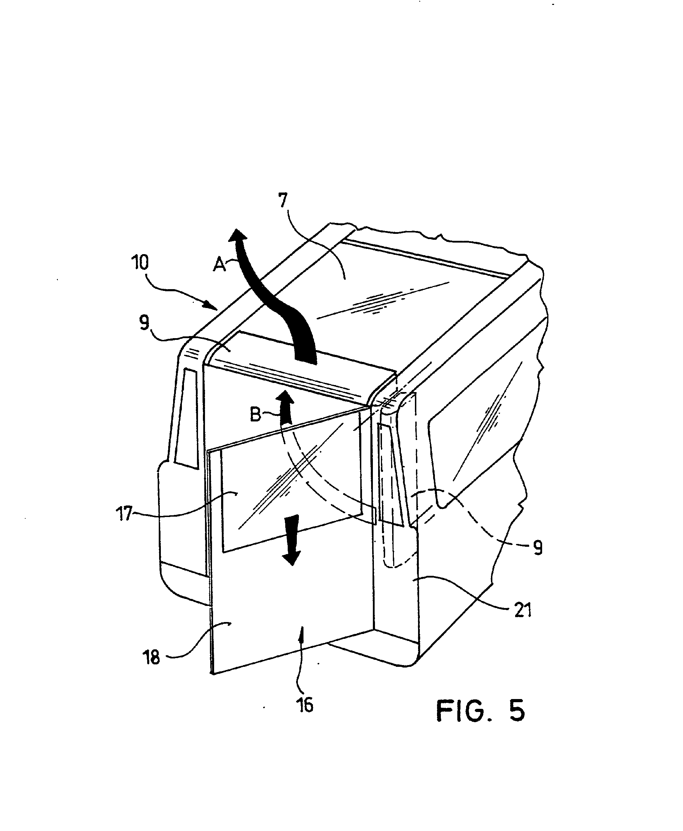

In einer anderen Ausführungsvariante (siehe Fig. 5) ist der Dachquerholm 9 aus seiner Anordnung am Hinterende des Daches 2 bzw. des hinteren Dachabschnitts 10 nach dem Lösen an der Lagereinrichtung und an der gegenüberliegenden Befestigung am Dachholm oder, falls der Dachquerholm 9 ohne ein Schwenklager mit beidseitigen Befestigungseinrichtungen festlegbar ist, nach dem Lösen der beiden Befestigungseinrichtungen gänzlich herausnehmbar (Pfeil A).

In einer Alternative (Fig. 5) ist der Dachquerholm 9 um sein Schwenklager nach unten in eine in etwa vertikale Position schwenkbar und im Fahrzeug in etwa an der C-Säule 21 in eine Ausnehmung ablegbar. Dabei ist der Dachquerholm 9 derart bewegt, daß er aus seiner Position oberhalb der Hecktüre 16 an der Innenseite der Hecktüre 16 vorbeigeschwenkt wird.

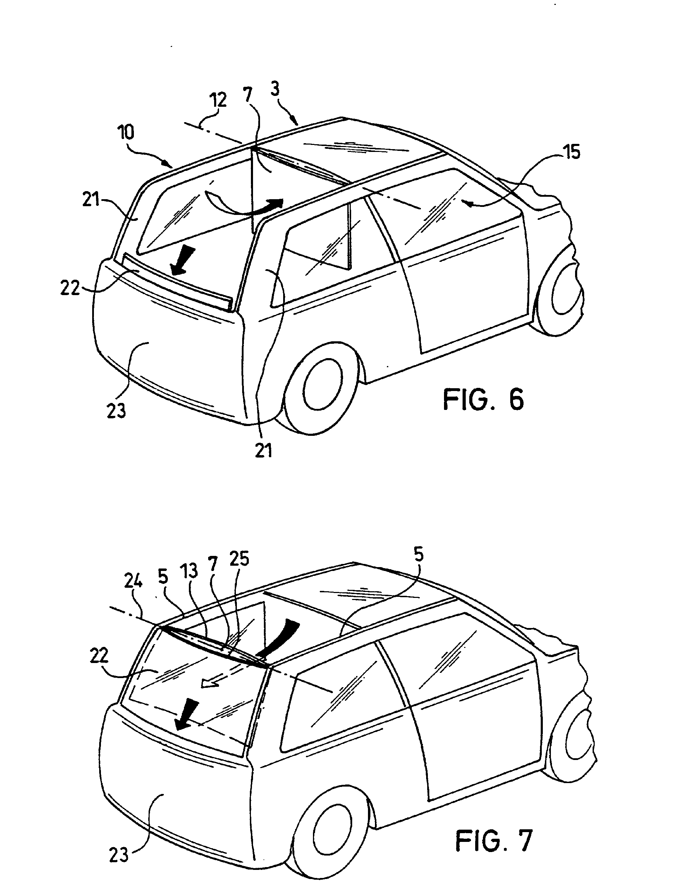

Ein in Fig. 6 dargestelltes Kombifahrzeug enthält eine vergleichbare Anordnung des hinteren Deckels 7 am hinteren Dachabschnitt 10, wobei der Deckel 7 um die Querachse 12 nach unten schwenkbar ist und eine in etwa vertikale Abtrennung zum Fahrgastraum bildet. Eine Heckscheibe 22 ist beidseits an der C-Säule 21 und/oder in einer Heckstruktur 23 geführt und in die Heckstruktur 23 absenkbar, so daß der Dach-/Heckbereich oberhalb der Ladefläche 14 vollständig geöffnet werden kann. Bei dieser Variante ohne hinteren Dachquerholm 9 wird zunächst die dichtend an der Unterseite des Deckels 7 anliegende Heckscheibe 22 um einen Betrag abgesenkt, der ein Vorbeischwenken der Hinterkante des Deckels 7 ermöglicht.

Bei der in der nicht zur Erfindung gehörenden Fig. 7 dargestellten Ausführungsform ist der Deckel 7 um die im Bereich seines Hinterrandes 13 verlaufende hintere Querachse 24 nach unten verschwenkbar und von innen an die Heckscheibe 22 anlegbar. Die Heckscheibe 22 und der Deckel 7 werden gemeinsam in die Heckstruktur 23 abgesenkt. Der Deckel 7 kann im Bereich seines Hinterrandes 13 an den beiden seitlichen Dachholmen 5 oder auch an der Heckscheibe 22 schwenkbar gelagert sein, wobei eine Dichtung, die im Schließzustand den Deckel 7 an der Heckscheibe 22 abdichtet, sowohl am Oberrand 25 der Heckscheibe 22 wie auch am Hinterrand 13 des Deckels 7 angebracht sein kann.

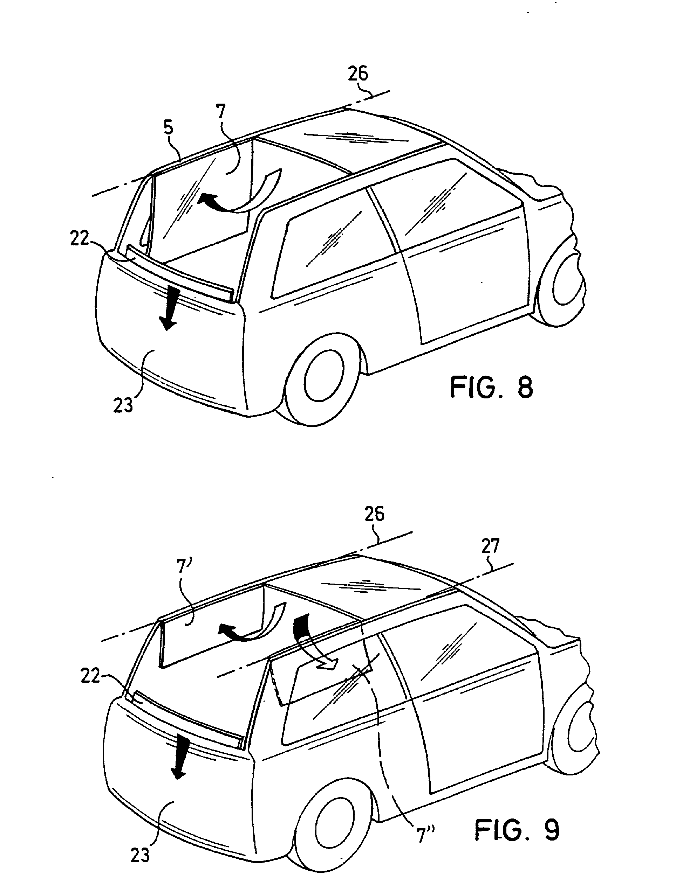

Die folgenden Figuren 8 bis 10 gehören ebenfalls nicht zur Erfindung.
Fig. 8 zeigt das Fahrzeug mit einem am linken Dachholm 5 schwenkbar befestigten Deckel 7, der um eine Längsachse 26 an die linke Fahrzeuginnenseite, beim dargestellten Ausführungsbeispiel an das linke hintere Fenster, herabschwenkbar ist.

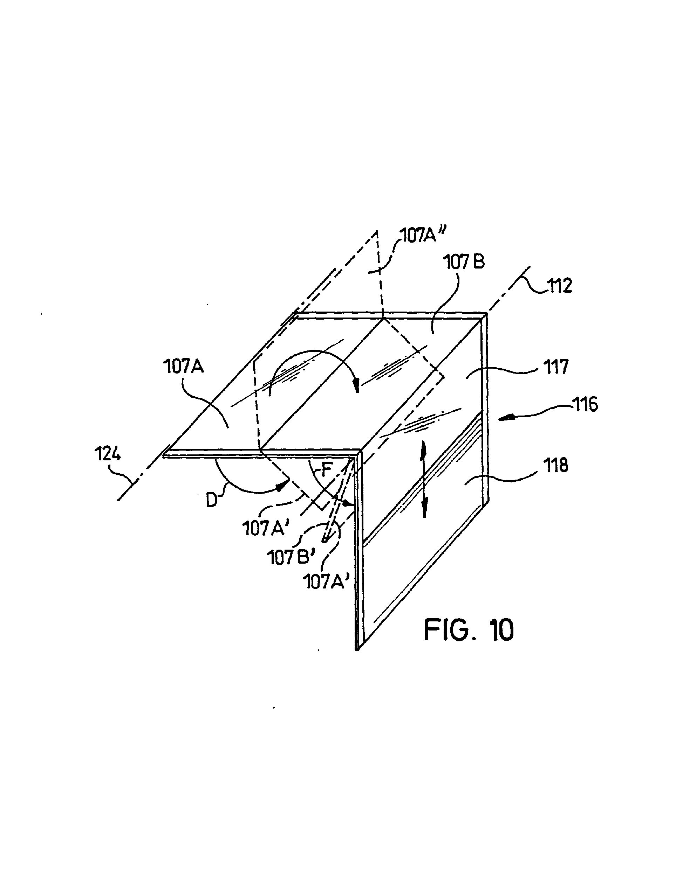

Bei der in Fig. 9 dargestellten Alternative ist der hintere Deckel 7 in einen linken und einen rechten Deckel 7' und 7'' unterteilt, die in ihrer Schließstellung in der Dachfläche dicht aneinander anliegen und zum Öffnen mit ihrer jeweiligen Schwenklagerung am linken bzw. am rechten Dachholm 5 um die zugehörige linke und rechte Längsachse 26 bzw. 27 herabschwenkbar sind.

In Fig. 10 ist eine weitere Variante einer Heckraumabdeckung mit mehreren Deckel-Teilen gezeigt. Hierbei sind zur Vereinfachung die benachbarten Teile weggelassen worden. Insbesondere bei größeren Dachflächen ist es vorteilhaft, wenn der in den vorangehenden Ausführungsbeispielen einteilige Deckel 7 in zwei oder mehrere Deckelabschnitte 107A und 107B unterteilt wird. Diese beiden Deckelelemente 107A und 107B sind mit einer Scharnierachse miteinander verbunden, die vorzugsweise ein Einklappen des vorderen Deckels 107A nach unten gemäß der in Fig. 10 gestrichelten Kontur 107A' an den hinteren Deckel 107B angeschwenkt ist (Pfeil D in Fig. 10). Anschließend werden die beiden zu einem Paket verbundenen Deckel 107A und 107B um eine am Ende des Dachbereichs liegende hintere Schwenkachse 112 gemäß dem Pfeil F nach unten an die Heckscheibe 117 angeschwenkt und anschließend das gesamte Paket aus den beiden Deckeln 107A und 107B und der Heckscheibe 117 nach unten in die Heckstruktur 118 abgesenkt.

Auch wenn das Klappen des vorderen Deckels 107A bevorzugt nach unten erfolgt, ist in einer weiteren gestrichelt angedeuteten Kontur 107A'' verdeutlicht, daß das Übereinanderklappen der beiden Deckel auch durch Schwenken des vorderen Deckels 107A'' nach oben erfolgen kann.

Statt des Zusammenklappens der beiden Deckel 107A und 107B nach hinten kann ebenso auch in nicht dargestellter Weise ein Anklappen des Deckels 107B beispielsweise nach Absenken der Heckscheibe 117 nach vorne unten unter den vorderen Deckel 107A erfolgen, worauf dann beide Deckel 107A und 107B um eine nahe der Vorderkante des vorderen Deckels 107A angeordnete Schwenkachse nach unten (wie in den Figuren 1 - 4 gezeigt) geschwenkt werden können.

Die beschriebene Dach-/Heckstruktur eignet sich für unterschiedliche Fahrzeuge wie beispielsweise Geländewagen, Großraumlimousinen, Vans, Offroad-Wagen, Kleintransporter oder derartige Fahrzeuge, bei denen ein zu öffnender Laderaum in der Art eines Pick-up-Fahrzeugs gebildet werden kann, so daß die Bezeichnung des Fahrzeugs als Personenwagen keine Beschränkung auf einen speziellen Fahrzeugtyp darstellt.

### Bezugszeichenliste

- 1: Heck
- 2: Dach
- 3: vorderer Dachabschnitt
- 4: vordere Dachöffnung
- 5: Dachholme
- 6: Schiebedachdeckel
- 7: Deckel
- 7': linker Deckel
- 7": rechter Deckel
- 8: hintere Dachöffnung
- 9: Dachquerholm
- 10: hinterer Dachabschnitt
- 11: Vorderrand
- 12: Querachse
- 13: Hinterrand
- 14: Ladefläche
- 15: Fahrer- und Insassenbereich
- 16: Hecktüre
- 17: Heckfenster
- 18: Türteil
- 19: rechtes Ende
- 20: linkes Ende
- 21: C-Säule
- 22: Heckscheibe
- 23: Heckstruktur
- 24: hintere Querachse
- 25: Oberrand
- 26: Längsachse
- 107A: vorderer Deckel
- 107B: hinterer Deckel
- 112: Schwenkachse
- 116: Hecktüre
- 117: Heckfenster (Heckscheibe)
- 118: (unteres) Türteil (Heckstruktur)
- 124: Schwenkachse

## Patentansprüche

1. Personenkraftwagen mit einem variablen Dach-/Heckbereich, insbesondere ein Kombi oder ein Geländewagen mit einem Heckladeraum, bei dem ein Deckel eines hinteren Dachabschnitts und ein Heckteil zu öffnen sind,
**dadurch gekennzeichnet, daß** der Deckel (7, 7', 7'', 107A, 107B) des hinteren Dachabschnitts (10) im Bereich seines Vorderrandes (11) am Dach (2) um eine im Bereich des Daches (2) verlaufende Querachse (12, 24) innerhalb der Fahrzeugkontur aus der Dachfläche herabschwenkbar ist und daß als öffnungsfähiges Heckteil ein Heckfenster (22) in einer Hecktüre (16) verschiebbar gelagert und in einen unteren Türteil (18) absenkbar oder eine Heckscheibe (22) am Heck (1) verschiebbar gelagert und in eine untere Heckstruktur (23) absenkbar ist.

2. Personenkraftwagen nach Anspruch 1, **dadurch gekennzeichnet, daß** der Deckel (7) in seiner in etwa vertikal herabgeschwenkten Stellung eine rückseitige Abtrennung des vorderen Fahrgastraumes (15) bildet.

3. Personenkraftwagen nach Anspruch 1 oder 2, **dadurch gekennzeichnet, daß** ein Dachquerholm (9) am Hinterende des Daches (2) lösbar angebracht ist, an dem der geschlossene Deckel (7) dicht anliegt.

4. Personenkraftwagen nach Anspruch 3, **dadurch gekennzeichnet, daß** der Dachquerholm (9) am Dach (2) einerseits mit einer Gelenklagerung und andererseits mit einer lösbaren Befestigung angebracht ist, so daß er in eine in etwa vertikale Position herabklappbar oder in eine horizontale Position an einen Seitenholm (5) ausschwenkbar ist.

5. Personenkraftwagen nach einem der Ansprüche 1 bis 4,
**dadurch gekennzeichnet, daß** der Deckel (7) aus transparentem Material, insbesondere aus Glas, besteht.

6. Personenkraftwagen nach einem der Ansprüche 1 bis 5,
**dadurch gekennzeichnet, daß** ein elektromechanischer Antrieb in einer gesteuerten Bewegungsabfolge den oder die Deckel (7; 7', 7", 107A, 107B) und die Heckscheibe (22) bzw. den oder die Deckel (7, 7', 7", 107A, 107B) und den Dachquerholm (9) bewegt.

7. Personenkraftwagen nach einem der Ansprüche 1 bis 6,
**dadurch gekennzeichnet, daß** ein vorderer Schiebedachdeckel (6) über den oder die hinteren Deckel (7, 7', 7'', 107A, 107B) verschiebbar ist.

## Claims

1. Passenger motor vehicle equipped with a variable roof/tailgate area, in particular an estate car or a cross-country vehicle having a rear luggage compartment, in which a panel of a rear roof section and a rear part can be opened,
**characterized in that** in the region of its front edge (11) on the roof (2), the panel (7, 7', 7", 107A, 107B) of the rear roof section (10) can be pivoted down out of the roof area and within the vehicle contour about a transverse axis (12, 24) running in the region of the roof (2), and **in that**, as a rear part that can be opened, a rear window (22) is displaceably mounted in a rear door (16) and can be lowered into a lower door part (18), or a rear window (22) is displaceably mounted on the tail (1) and can be lowered into a rear tail structure (23).

2. Passenger motor vehicle according to Claim 1, **characterized in that** the panel (7) can form a rear divider of the front passenger compartment (15) when it is in its position pivoted down approximately vertically.

3. Passenger motor vehicle according to Claim 1 or 2, **characterized in that** a roof crossmember (9), on which the closed panel (7) bears tightly, is fitted detachably at the rear end of the roof (2).

4. Passenger motor vehicle according to Claim 3, **characterized in that** the roof crossmember (9) is fitted to the roof (2) on one side with a joint mounting and on the other side with a detachable fastening, so that it can be folded down into an approximately vertical position or can be pivoted out into a horizontal position on a side member (5).

5. Passenger motor vehicle according to one of Claims 1 to 4, **characterized in that** the panel (7) consists of transparent material, in particular of glass.

6. Passenger motor vehicle according to one of Claims 1 to 5, **characterized in that** an electromechanical drive moves the panel or the panels (7, 7', 7", 107A, 107B) and the rear window (22) or, respectively, the panel or the panels (7, 7', 7", 107A, 107B) and the roof crossmember (9) in a controlled movement sequence.

7. Passenger motor vehicle according to one of Claims 1 to 6, **characterized in that** a front sliding roof panel (6) can be displaced over the rear panel or panels (7, 7', 7", 107A, 107B).

## Revendications

1. Voiture particulière avec une aire de toit/arrière variable, en particulier break ou véhicule tout-terrain avec un espace de chargement arrière, dans laquelle un panneau d'une partie de toit arrière et une partie arrière de véhicule peuvent être ouverts, **caractérisée en ce que** le panneau (7, 7', 7", 107A, 107B) de la partie de toit arrière (10) peut, dans la région de son bord avant (11), sur le toit (2), autour d'un axe transversal (12, 24) s'étendant dans la région du toit (2), être abaissé par pivotement hors de la surface de toit et à l'intérieur du contour du véhicule, et **en ce que**, comme partie arrière de véhicule pouvant être ouverte, une fenêtre arrière (22) est montée à coulissement dans une porte arrière (16) et peut être abaissée dans une partie inférieure de porte (18), ou une vitre arrière (22) est montée à coulissement sur l'arrière (1) du véhicule et peut être abaissée dans une structure arrière inférieure (23).

2. Voiture particulière selon la revendication 1, **caractérisée en ce que** le panneau (7), dans sa position abaissée par pivotement approximativement verticale, constitue une séparation arrière de l'habitacle avant (15).

3. Voiture particulière selon la revendication 1 ou 2, **caractérisée en ce qu'**un montant transversal de toit (9), contre lequel s'applique hermétiquement le panneau fermé (7), est installé de manière amovible à l'extrémité arrière du toit (2).

4. Voiture particulière selon la revendication 3, **caractérisée en ce que** le montant transversal de toit (9) est monté sur le toit (2) d'une part avec une liaison articulée et d'autre part avec une fixation amovible, de sorte qu'il peut être rabattu dans une position approximativement verticale ou écarté par pivotement dans une position horizontale contre un montant latéral (5).

5. Voiture particulière selon l'une des revendications 1 à 4, **caractérisée en ce que** le panneau (7) est réalisé en un matériau transparent, notamment en verre.

6. Voiture particulière selon l'une des revendications 1 à 5, **caractérisée en ce qu'**un entraînement électromécanique, dans une succession commandée de mouvements, déplace le ou les panneaux (7, 7', 7", 107A, 107B) et la vitre arrière (2), ou respectivement le ou les panneaux (7, 7', 7", 107A, 107B) et le montant transversal de toit (9).

7. Voiture particulière selon l'une des revendications 1 à 6, **caractérisée en ce qu'**un panneau avant (6) de toit coulissant peut être coulissé au-dessus du ou des panneaux arrière (7, 7', 7", 107A, 107B).
